# EUROPEAN PATENT APPLICATION

(11) **EP 0 688 072 A1**
(43) Date of publication of application: **20.12.1995**
(21) Application number: 94830292.2
(22) Date of filing: 14.06.1994
(51) Int. Cl.: H02G 1/00, H01B 13/00, F16L 3/13, H02G 3/26

(54) **A device for restraining a set of electrical conductors for systems for the preparation of bundles of conductors**

(71) Applicant: SIX TAU S.p.A., I-10129 Torino (IT)
(72) Inventor: Culasso, Giorgio, I-10080 San Benigno Canavese (Torino) (IT)
(74) Representative: Marchitelli, Mauro

(57) **Abstract**

The device comprises a body (22) having a seat (28) for restraining the conductors with an input section (30) through which the conductors (14) can be inserted in sequence. The body comprises a pair of jaws (32) associated with resilient means (36) for holding the jaws (32) in a position in which the input section (30) is closed. The jaws (32) can be opened out against the action of the resilient means (36) to allow the conductors (14) to pass through the input section (30).

## Description

The present invention relates to a device for restraining a set of electrical conductors for systems for the preparation, and possibly the testing, of bundles of conductors.

In the automotive field, the bundles of conductors for supplying the various electrical devices are generally prepared and checked before they are fitted in the vehicle. In order to prepare a bundle of conductors, a multiplicity of single-core or multi-core electrical conductors are arranged along predefined paths and the various conductors are then prepared by clamping, taping or enclosure in tubes. These operations are carried out on a table on which there is a plurality of devices for restraining the conductors along predefined paths as the conductors are gradually assembled to form a bundle.

The object of the present invention is to provide a device for restraining a set of conductors which is simple and reliable and which enables all the operations for the preparation of the bundles of conductor (clamping, taping and enclosure in tubes) and the subsequent extraction of the finished product to be carried out simply and easily.

The device according to the present invention is characterized in that it comprises a body having a seat for restraining the conductors, with an input section through which the conductors can be inserted in sequence by a movement transverse the conductors, the body having a pair of jaws associated with resilient means for holding the jaws in a position in which the input section is closed, the jaws being capable of being opened out against the action of the resilient means to allow the conductors to pass through the input section.

The device according to the invention may be associated with a remote-controlled device for opening the jaws and may be associated with an automatic device for completely extracting the finished bundles of conductors.

Further characteristics and advantages of the device according to the invention will become clear in the course of the detailed description which follows, purely by way of non-limiting example, with reference to the appended drawings, in which:
Figure 1 is a schematic, perspective view of a system for the preparation of bundles of conductors,
Figure 2 is a perspective view of a restraining device indicated by the arrow II in Figure 1,
Figure 3 is a perspective view of the device of Figure 2 in the open configuration,
Figure 4 is a transparent, perspective view of the device according to the invention,
Figures 5 and 6 are partial views showing the steps of the insertion of a conductor,
Figure 7 is a schematic side view showing the use of an extractor, and
Figures 8 and 9 are front views taken on the arrow VIII of Figure 7, showing the operation of the extractor.

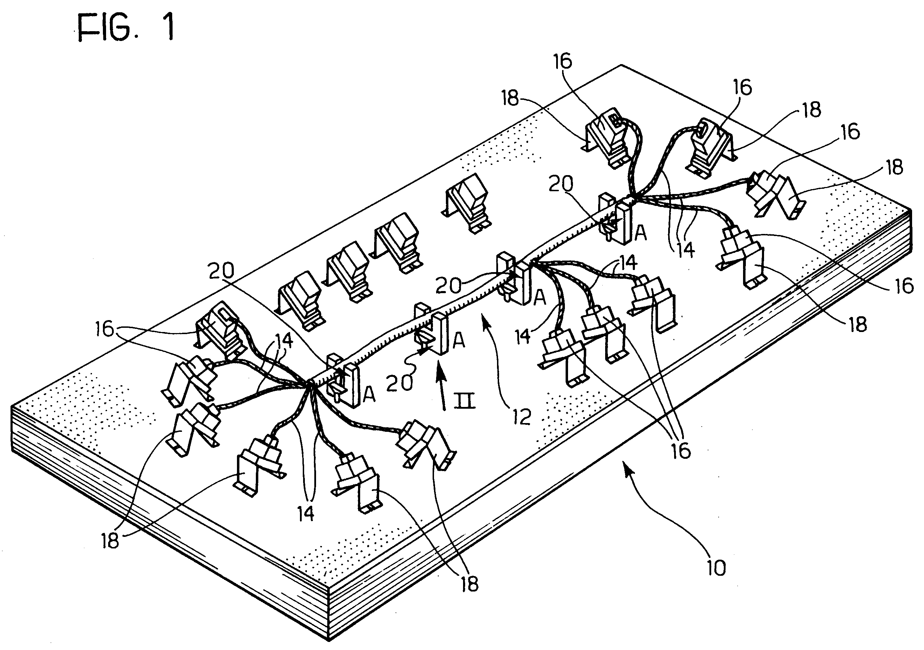

In Figure 1, the table of a system for the preparation, or for the preparation and checking, of bundles of conductors 12 constituted by a plurality of insulated electrical conductors 14 connected to connectors 16, is indicated 10.

During the preparation of the bundles of conductors, the connectors 16 are restrained by known devices 18, which fall outside the present invention. The conductors 14 are restrained in a predetermined layout by a series of restraining devices 20 disposed in fixed positions on the table 10.

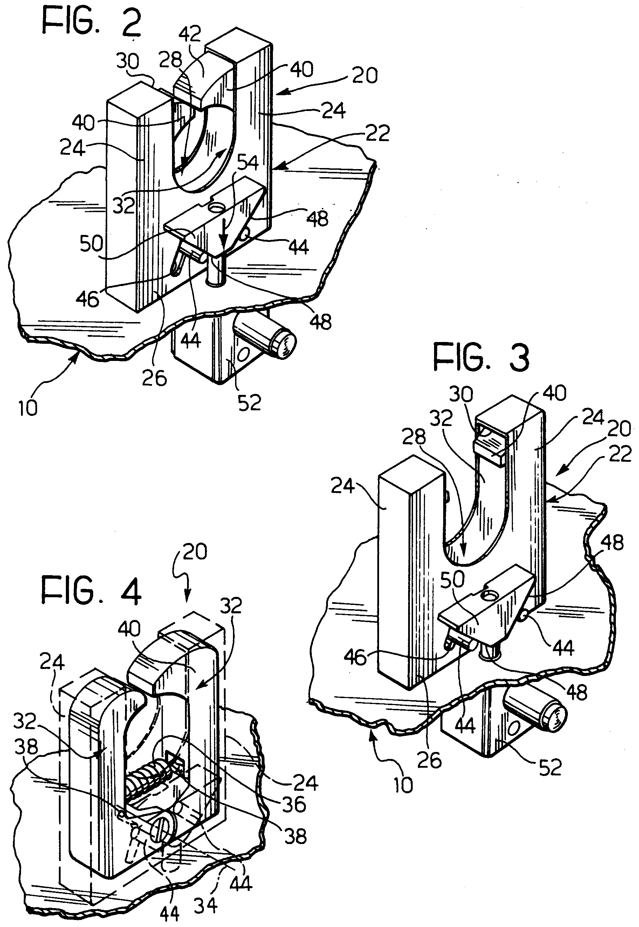

With reference to Figures 2-4, each restraining device 20 comprises a body 22 in the form of a U-shaped, box-like casing with two parallel arms 24 and a base 26. A seat 28 for restraining the conductors, and having an input section 30, is defined between the two arms 24 of the body 22.

The body 22 houses a pair of jaws 32 (see Figure 4 in particular) which are articulated to one another about an axis 34 disposed on the base 26 of the body 22. Between the jaws 32 there is a helical tension spring 36, the ends of which are anchored to the jaws 32 at the points indicated 38.

The casing 22 is open along the outline of the seat 28 and the jaws 32 have heads 40 which close the input section 30 of the seat 28. The heads 40 of the jaws 32 have lead-in surfaces 42 which facilitate the insertion of the conductors 14 in the seat 28.

Each jaw 32 has a projecting pin 44, parallel to and spaced from the articulation axis 34. The pins 44 project from the casing 22 through respective slots 46 and cooperate with respective inclined surfaces 48 of a wedge-shaped element 50 which is movable between the two operative positions shown in Figures 2 and 3. The wedge-shaped element 50 is carried by the rod of a pneumatic actuator 52 disposed below the table 10.

In the configuration of Figure 2, the actuator 52 is in a rest position and the jaws 32 are kept in a closed position by the biasing action of the spring 36. If the actuator 52 is activated, the wedge-shaped element 50 moves in the direction indicated by the arrow 54 in Figure 2 and acts on the pins 44 to open out the jaws 32 against the action of the spring 36 (the configuration of Figure 3).

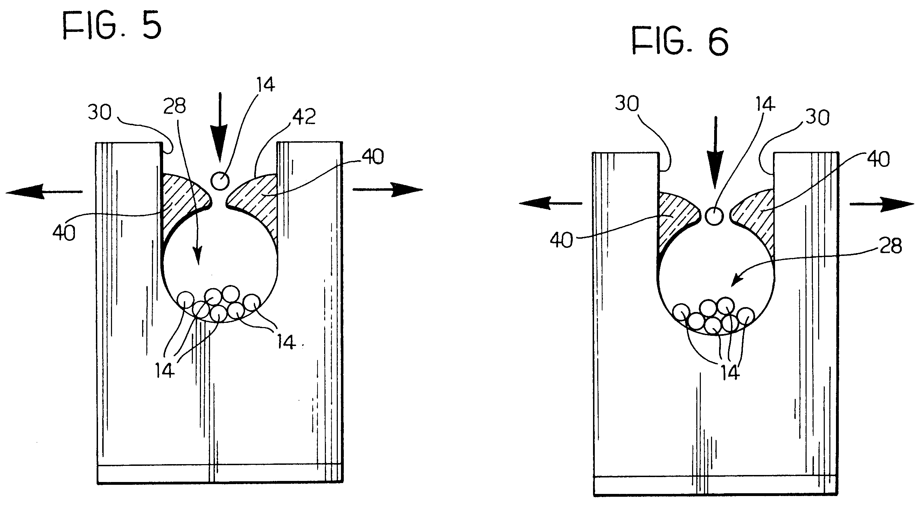

Throughout the steps of the preparation of the bundles of conductors 12, the actuators 52 of the various restraining devices 20 are kept in the rest position. The various conductors 14 are inserted, in sequence, in the seats 28 of the various restraining devices 20 by a movement transverse the axis of the wire. As can be seen in Figures 5 and 6, the exertion of a slight force on the lead-in surfaces 42 of the jaws 32 by means of the conductor 14 opens out the jaws 32, enabling the conductor 14 to enter the seat 28. As soon as the conductor 14 has passed through the input section 30, the jaws 32 close, restraining the conductor in the seat 28. In the event of any error in the insertion of a conductor 14 in a restraining device 20, because the conductor 14 has not been positioned in accordance with the design layout, the same conductor 14 can easily be removed by moving the conductor 14 radially outwardly from inside the seat.

Upon the completion of the steps of the spreading out of all the conductors 14 making up the bundles of conductors and after the product has been prepared and/or finished (clamped, taped, etc.), the restraining devices 20 are brought to the open position (simultaneously or in a programmed sequence) by the operation of the respective actuators 52 and are kept in the open position to enable the prepared bundles of conductors 12 to be removed.

Before the next assembly cycle starts, the actuators 52 are de-activated, returning the jaws 32 to the closed position of Figure 2.

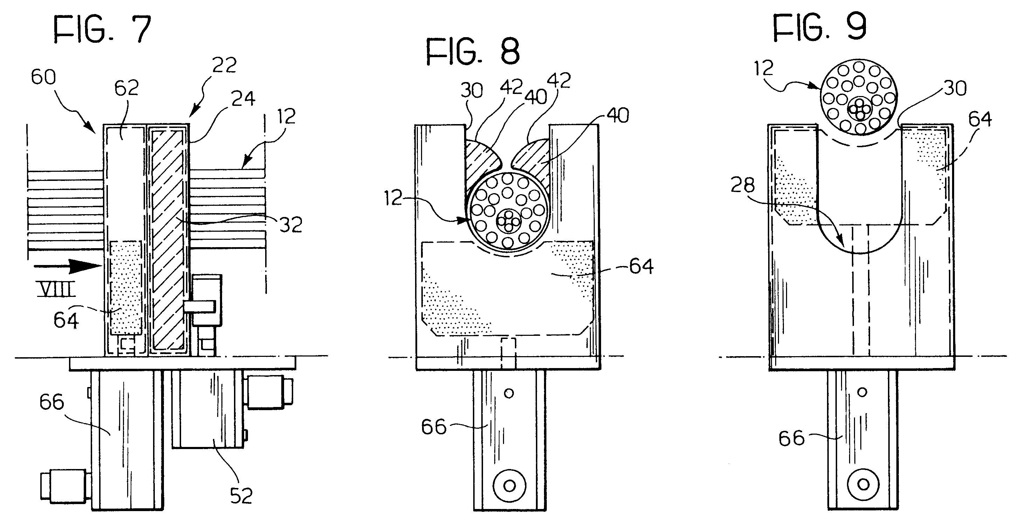

In the variant of Figures 7-9, the restraining device 20 has an extraction device 60 including a casing 62 identical to the casing 22, in which the jaws 32 are housed. An extractor member 64, mounted slidably in the casing 62, is operated by a pneumatic actuator 66 disposed beneath the table 10.

As can be seen in Figure 9, the extractor member 64 can urge the bundles of conductors 12 out of the input section 30 of the seat 28, leaving the bundles 12 completely free so that it can be picked up by the operator without the bundles 12 becoming entangled with or rubbing against the restraining devices 20. The extraction device 60 is actuated simultaneously with the opening of the jaws 32, with a delay controlled by a flow regulator or another device which can allow the jaws 32 to open fully before the extraction device 60 completes its vertical travel.

## Claims

1. A device for restraining a set of electrical conductors for systems for the preparation of bundles of conductors (12), characterized in that it comprises a body (22) having a seat (28) for restraining the conductors (12), with an input section (30) through which the conductors(14) can be inserted in sequence by a movement transverse the conductors (14), the body (22) having a pair of jaws (32) associated with resilient means (36) for holding the jaws in a position in which the input section (30) is closed, the jaws (32) being capable of being opened out against the action of the resilient means (36) to allow the conductors (14) to pass through the input section (30).

2. A device according to Claim 1, characterized in that the body (22) is in the form of a U-shaped, box-like casing with two parallel arms (24) and a base (26), and in that the jaws (32) are housed within the two arms (24) of the body (22) and are articulated to one another on the base (26).

3. A device according to Claim 2, characterized in that the resilient means comprise a helical tension spring (36), the ends of which are anchored to the jaws (32) so as to exert on the jaws a turning moment which tends to keep them together.

4. A device according to any one of the preceding claims, characterized in that it comprises a remote-controlled device for opening the jaws.

5. A device according to Claim 4, characterized in that the opening device comprises a fluid actuator (52) which moves a wedge-shaped member (50) between two operative positions corresponding to the closed and open positions of the jaws.

6. A device according to Claim 5, characterized in that the wedge-shaped member (50) has two active surfaces (48) which cooperate with the respective projecting elements (44) fixed to the jaws (32).

7. A device according to any one of the preceding claims, characterized in that it comprises a device (60) for extracting the bundles of conductors, having an extractor member (64) operated by a fluid actuator (66) for urging the bundles of conductors (12) out of the input section (30) of the seat (28).

8. A device according to Claim 7, characterized in that the extractor device comprises a U-shaped casing (62) in which the extractor member (64) is slidable, the casing having a shape substantially identical to that of the body (22) carrying the jaws (32).
